# EUROPEAN PATENT APPLICATION

(11) **EP 4 040 323 A1**
(43) Date of publication of application: **10.08.2022**
(21) Application number: 19947813.2
(22) Date of filing: 01.10.2019
(51) Int. Cl.: G06F 21/64, G06F 16/182

(54) **TRANSACTION MANAGEMENT DEVICE, TRANSACTION MANAGEMENT PROGRAM, AND TRANSACTION MANAGEMENT METHOD**

(71) Applicant: FUJITSU LIMITED, Kawasaki-shi, Kanagawa 211-8588 (JP)
(72) Inventor: YONEKURA, Yuki, Kawasaki-shi, Kanagawa 211-8588 (JP); SHIMIZU, Toshiya, Kawasaki-shi, Kanagawa 211-8588 (JP); FUJIMOTO, Shingo, Kawasaki-shi, Kanagawa 211-8588 (JP)
(74) Representative: Hoffmann Eitle
(86) International application number: PCT/JP2019/038699
(87) International publication number: WO 2021/064852

(57) **Abstract**

A transaction management device includes: a first registration unit (52, 53) that registers, into a database (4), with respect to a first blockchain (2) that stores a plurality of transactions with which first information and second information are associated, a plurality of pieces of the second information in the plurality of transactions in units of groups based on the first information; and a second registration unit (51, 52) that registers, into a second blockchain (3), hash values obtained by hashing the plurality of pieces of second information in the units of groups.

## Description

### TECHNICAL FIELD

The present invention relates to a transaction management device, a transaction management program, and a transaction management method.

### BACKGROUND ART

Services using blockchain (Blockchain) techniques have been becoming popular in a wide variety of industries.

When a long-term operation of the blockchain is attempted, it is assumed that the amount of data increases due to accumulation of block information in each node. One of methods for solving the increase in the amount of data may be, for example, periodically migrating collective data of a blockchain to another system and restarting the blockchain at a migration source every time the blockchain is migrated.

A system at a migration destination includes a blockchain into which a hash value of each transaction data is registered and a database (DB; Database) into which each transaction data is registered.

When referring to the data in the system at the migration destination, by comparing reference data and the hash values registered into the blockchain, data tampering on the database can be detected. The reference data is, for example, the transaction data obtained by referring to (searching) the database. If the hash value obtained by performing hash operation on the reference data matches the hash value registered into the blockchain, the data in the database can be determined not to have been tampered with, and if not, the data in the database can be determined to have been tampered with.

### CITATION LIST

### PATENT DOCUMENT

[Patent Document 1] Japanese National Publication of International Patent Application No. 2018-537022
[Patent Document 2] Japanese Laid-open Patent Publication No. 2018-147016
[Patent Document 3] International Publication Pamphlet No. WO 2017/170912

### SUMMARY OF THE INVENTION

### PROBLEMS TO BE SOLVED BY THE INVENTION

Since the system at the migration destination hashes each transaction data, tampering verification of data in the database is performed for each transaction, which results in poor processing efficiency. In addition, as compared with a case of hashing a lump size of data, hashing each transaction data results in poor compression efficiency of the capacity of the system at the migration destination. As such, regarding the tampering verification of transactions, processing efficiency of the verification and the compression efficiency of the hash data are poor.

In one aspect, an object of the present invention is to streamline tampering verification of migrated transactions.

### MEANS TO SOLVE THE PROBLEM

According to an aspect of the embodiment, a transaction management device may include: a first registration unit that registers, into a database, with respect to a first blockchain that stores a plurality of transactions with which first information and second information are associated, a plurality of pieces of the second information in the plurality of transactions in units of groups based on the first information; and a second registration unit that registers, into a second blockchain, hash values obtained by hashing the plurality of pieces of second information in the units of groups.

### EFFECT OF THE INVENTION

In one aspect, tampering verification of migrated transactions can be streamlined.

### BRIEF DESCRIPTION OF DRAWINGS

FIG. 1 is a diagram illustrating an example of a blockchain system.
FIG. 2 is a diagram illustrating an example of a migration destination system.
FIG. 3 is a diagram illustrating an operation example of searching the migration destination system for an update history of data A as a reference data.
FIG. 4 is a diagram illustrating an operation example in which data is migrated from a previous blockchain to a migration destination blockchain.
FIG. 5 is a block diagram illustrating a functional configuration example of a blockchain system as an example of one embodiment.
FIG. 6 is a diagram illustrating an example in which, regarding keys A, B, and C in a migration source blockchain, data having the same keys are integrated into units of three update histories as update history groups.
FIG. 7 is a diagram illustrating an example of data registered into a blockchain and a DB at migration destinations.
FIG. 8 is a diagram illustrating an example of data registered into the migration source blockchain after initialization.
FIG. 9 is a diagram illustrating an example of relationships between time ranges and obtainment sources of data to be obtained.
FIG. 10 is a flowchart illustrating an operation example of a data migration process.
FIG. 11 is a flowchart illustrating an operation example of a data registration process.
FIG. 12 is a flowchart illustrating an operation example of a data reference process.
FIG. 13 is a flowchart illustrating an operation example of the data reference process.
FIG. 14 is a block diagram illustrating a hardware configuration example of a computer as an example of the one embodiment.

### DESCRIPTION OF EMBODIMENT(S)

Hereinafter, an embodiment of the present invention will now be described with reference to the drawings. The embodiment described below is merely illustrative, and can be variously modified and implemented without departing from the scope thereof. In the drawings used for the following embodiment, the same reference symbols denote the same or similar parts, unless otherwise specified.

### <1> One Embodiment

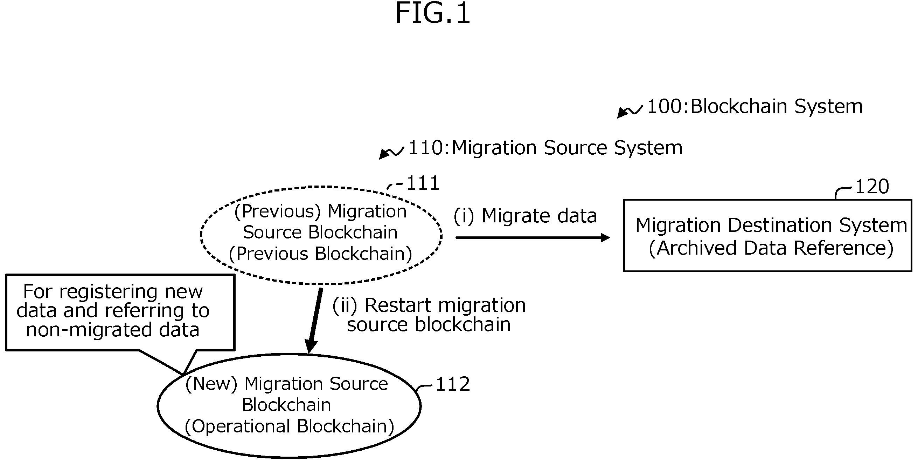

FIG. 1 is a diagram illustrating an example of a blockchain system 100. With reference to FIG. 1, description will now be made in relation to an example of a method for eliminating an increase in the amount of data in the blockchain system 100. For example, collective data of a migration source blockchain 111 in a migration source system 110 is periodically (e.g., once a year) migrated to a migration destination system 120 (see symbol (i)), and the migration source blockchain 111 is restarted (see symbol (ii)). Since blocks stored in the migration source blockchain 111 change (for example, are initialized) by the restart, in order to differentiate between before and after the restart (before and after the migration), the migration source blockchain 111 after the restart is expressed as a migration source blockchain 112, for convenience.

The data to be migrated is one or more blocks in the migration source blockchain 111, and the data after the migration is stored (held) into the migration source blockchain 112 as non-migrated blocks until the migration source blockchain 112 is restarted next time.

The migration source blockchain 112 is used for operations such as registering new data into the migration source system 110 and referring to non-migrated data. On the other hand, the migration destination system 120 is used for referring to the migrated data, in other words, archived data.

Hereinafter, the migration source blockchain 111 before the restart is sometimes referred to as a "previous blockchain 111", and the migration source blockchain 112 used for operation after the restart is sometimes referred to as an "operational blockchain 112".

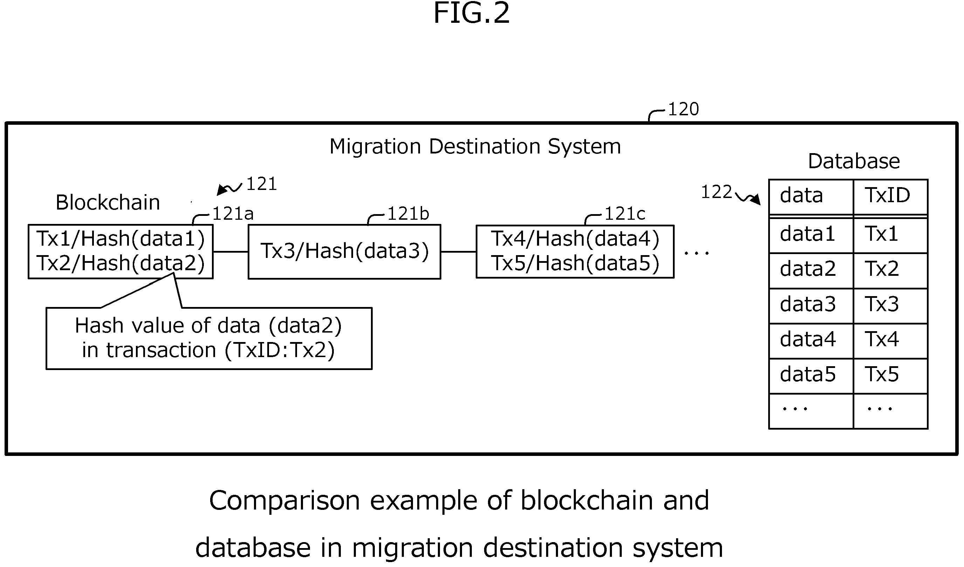

FIG. 2 is a diagram illustrating an example of the migration destination system 120. As illustrated in FIG. 2, the migration destination system 120 includes a blockchain 121 and a database (DB) 122. A Hash value of each transaction data is registered into the blockchain 121, and the data itself is registered into the DB 122 in such a manner that the hash value registered into the blockchain 121 can be referred to. For example, a transaction ID at the time when the hash value was registered into the blockchain 121 is added to each transaction data, and is registered into the DB 122. The transaction ID is an example of identification information that uniquely identifies the transaction data.

The blockchain 121 includes one or more blocks connected in a chain as blocks 121a, 121b, 121c, .... One or more hash values of the transaction data are registered into each of the blocks 121a, 121b, and 121c. In the example of FIG. 2, two hash values of Tx1/Hash (data1) and Tx2/Hash(data2) are registered into the block 121a. Tx1 and Tx2 are the transaction IDs (hereinafter, also referred to as "TxIDs"). The hash values respectively correspond to a hash value obtained by hashing the data (data1) updated by a process of the transaction of Tx1, and a hash value obtained by hashing the data (data2) updated by a process of the transaction of Tx2.

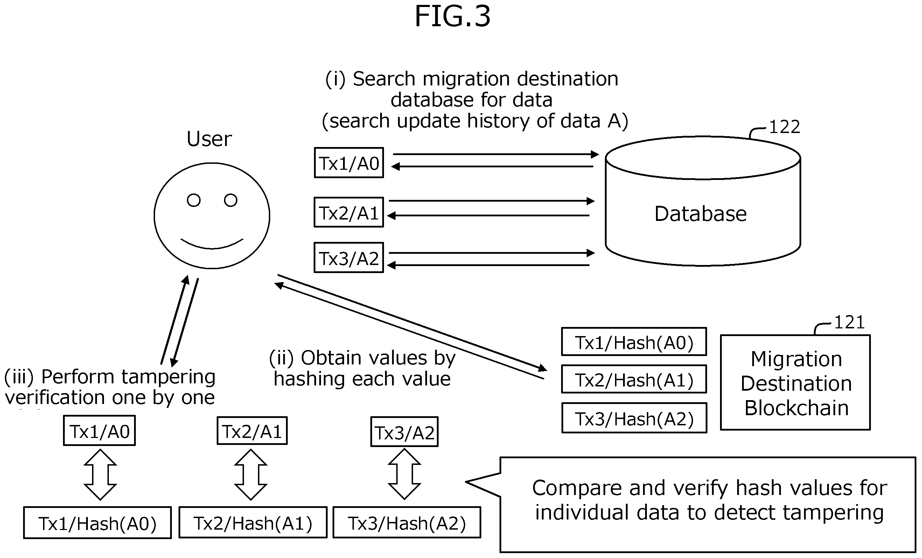

FIG. 3 is a diagram illustrating an operation example of searching the migration destination system 120 for an update history of data A as a reference data. As illustrated in FIG. 3, the user obtains update histories (A0, A1, A2) and these TxIDs (Tx1, Tx2, Tx3) of data A from the DB 122 (see symbol (i)). In FIG. 3, TxIDs and the update histories are denoted as Tx1/A0, Tx2/A1, Tx3/A2.

The user obtains the hash values of the transaction data from the migration destination blockchain 121 by using each TxID obtained from the DB 122 as a key (see symbol (ii)). Then, by comparing each data (update history) obtained from the DB 122 and each hash value obtained from the blockchain 121 one by one, the user verifies data tampering on the DB 122 (see symbol (iii)). As such, by comparing the data registered into the DB 122 with the hash values registered into the blockchain 121, which are difficult to tamper, it is possible to perform tampering verification of the data that is registered into the DB 122 and that has a risk of tampering.

However, in the migration destination system 120 illustrated in FIG. 2, since the transaction data is hashed one by one to be registered into the blockchain 121, the data and the hash values are compared one by one in the tampering detection process for the data registered into the DB 122, which results in poor efficiency.

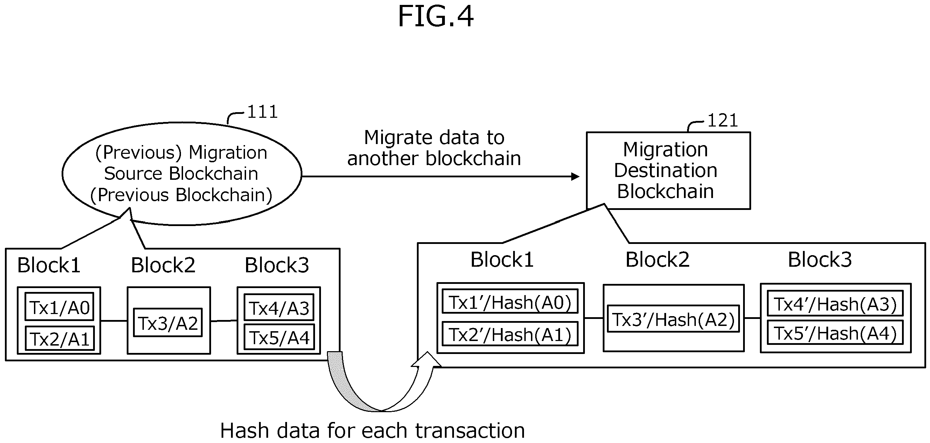

FIG. 4 is a diagram illustrating an operation example in which data is migrated from the previous blockchain 111 to the migration destination blockchain 121. As illustrated in FIG. 4, in the migration destination system 120, the data is hashed and registered into the migration destination blockchain 121 for each transaction in the previous blockchain 111. In the example of FIG. 4, Tx1/A0 to Tx5/A4 are hashed as Tx1'/Hash(A0) to Tx5'/Hash(A4), respectively.

However, as in FIG. 4, since the data is hashed in the units of transaction data, the number of transactions to be registered into the blockchain 121 does not decrease from the number of transactions in the blockchain 111. Therefore, as compared with a case where multiple transactions are collectively compressed, for example, the compression efficiency of the amount of data in the migration destination blockchain 121 is poor, and the reduction effect on the capacity of a storing region in the migration destination system 120 (migration destination blockchain 121) is small.

In addition, after a migration process is performed, the user (client) is to be aware of (determine) which one of the migration source (operational) blockchain 112 and a combination of the DB 122 and the migration destination blockchain 121 has the transaction data to be referred to. However, it is difficult for the user to determine which one of the migration source system 110 and the migration destination system 120 the data to be referred to exists in.

In view of the above, one embodiment describes a method for achieving migration (archiving) of blockchain data so that the amount of data managed by a blockchain can be reduced and tampering verification can be efficiently performed.

### <1-1> Functional Configuration Example of One Embodiment

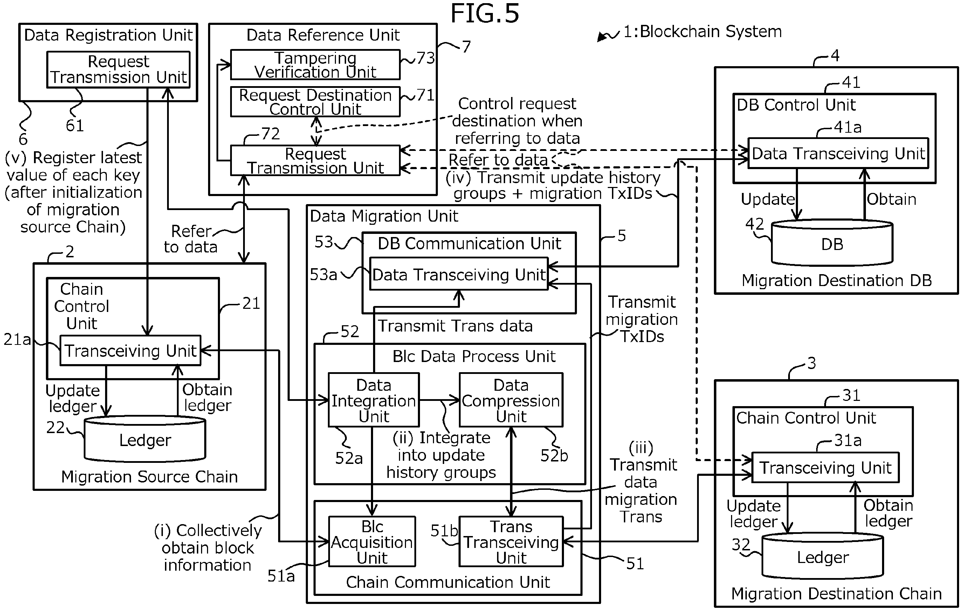

FIG. 5 is a block diagram illustrating a functional configuration example of a blockchain system 1 as an example of the one embodiment. As illustrated in FIG. 5, the blockchain system 1 may illustratively include, as a functional configuration, a migration source blockchain 2, a migration destination blockchain 3, a migration destination DB 4, a data migration unit 5, a data registration unit 6, and a data reference unit 7. In FIG. 5, a blockchain is denoted as "Chain", a block is denoted as "Blc", and a transaction is denoted as "Trans".

The migration source blockchain 2 is an example of a first blockchain that stores multiple transactions with which keys and values are associated. Each of the "keys" may be a processing target of a transaction and is an example of first information. Each of the "values" may be a value of a key (e.g., an updated value), which is updated by a process of a transaction, and is an example of second information.

The transaction is a record of a transaction, and the data of the transaction stored in the migration source blockchain 2 can be called an update history of a key. The transaction may exclude the key and the value themselves, and the value may be calculated from a record of one or more transactions for the same key.

In order to eliminate the enlargement of the data in the migration source blockchain 2, which is to be accumulated by the operation, the one embodiment assumes an operation that migrates the data in the migration source blockchain 2 to the migration destination blockchain 3 and the migration destination DB 4, and that initializes the migration source blockchain 2. Into the migration source blockchain 2 after the initialization, part of the migrated data and information on the migration destination are registered in advance, and then, the operation is resumed. The migration source blockchain 2 after the initialization is an example of a third blockchain.

As illustrated in FIG. 5, the migration source blockchain 2 includes a blockchain control unit 21 and a ledger 22.

The blockchain control unit 21 controls processes such as registration of and reference to transactions for the ledger 22. The blockchain control unit 21 may include a transceiving unit 21a. The transceiving unit 21a performs update on and reference to (obtainment from) the ledger 22, transmission and reception of data to and from the data migration unit 5, the data registration unit 6, and the data reference unit 7, and the like.

The ledger 22 includes a blockchain that connects and stores one or more blocks. Each of the blocks may include one or more transactions. The ledger 22 may include a DB in a key-value format, which stores a value (value) in association with a unique key.

For example, in the ledger 22, the transceiving unit 21a may write execution histories of transactions on the blockchain and the latest state of the result of the execution of the transactions on the DB. The transactions may include timestamps. The timestamps can be obtained and added by known methods . The transactions stored into the ledger 22 may be hash values, non-hashed values or both. When the hash values of the transactions are stored into the blockchain, the ledger 22 may, for example, further store records of the transactions of the non-hashed values.

The migration destination blockchain 3 is one of migration destinations of transaction data from the migration source blockchain 2, and is an example of a second blockchain. As illustrated in FIG. 5, the migration destination blockchain 3 includes a blockchain control unit 31 and a ledger 32.

The blockchain control unit 31 controls processes such as registration of and reference to transactions for the ledger 32. The blockchain control unit 31 may include a transceiving unit 31a. The transceiving unit 31a performs update on and reference to (obtainment from) the ledger 32, transmission and reception of data to and from the data migration unit 5 and the data reference unit 7, and the like.

The ledger 32 includes a blockchain that connects and stores one or more blocks. Each of the blocks may include one or more transactions. The ledger 32 may include a DB in a key-value format, which stores a value (value) in association with a unique key.

For example, in the ledger 32, the transceiving unit 31a may write execution histories of transactions on the blockchain and the latest state of the result of the execution of the transactions on the DB. The transaction may include timestamps. The timestamps can be obtained and added by known methods . The transactions stored into the ledger 32 may be hash values.

The migration destination DB 4 is one of the migration destinations of the transaction data from the migration source blockchain 2, and is an example of a database. As illustrated in FIG. 5, the migration destination DB 4 may include a DB control unit 41 and a DB 42.

The DB control unit 41 controls processes such as registration of and reference to data for the DB 42. The DB control unit 41 may include a data transceiving unit 41a. The data transceiving unit 41a performs update on and reference to (obtainment from) the DB 42, transmission and reception of data to and from the data migration unit 5 and the data reference unit 7, and the like.

The DB 42 stores the update histories of the keys of the migration source blockchain 2 and the transaction IDs (TxIDs) registered into the migration destination blockchain 3. For example, in the DB 42, the data transceiving unit 41a may write the update histories of the keys and the TxIDs. The reason why the migration destination DB 4 is used instead of registering the data directly into the migration destination blockchain 3 is to reduce the amount of data.

The data migration unit 5, the data registration unit 6, and the data reference unit 7 may be executed as, for example, processes (a data migration process, a data registration process, and a data reference process, respectively) each of which is a unit of processing performed by a processor of a computer. Each process of the data migration unit 5, the data registration unit 6, and the data reference unit 7 may be executed by different computers, or multiple processes may be executed by a common computer. The computer may be referred to as an information processing device or a transaction management device.

The one embodiment assumes that a wallet balance (value) of each customer is managed for each key in the migration source blockchain 2. Further, it is assumed that, in the migration destination blockchain 3, reading and writing of data migration information for the blockchain are defined by smart contracts or the likes, and time ranges can be specified when the data of the migration source and the migration destination are referred to. Furthermore, while the data is being migrated, it is assumed that the registration of and the reference to new data are unaccepted in the migration source blockchain 2.

### (Configuration Example of Data Migration Unit 5)

The data migration unit 5 integrates the transaction data of the migration source blockchain 2 into units in which the same keys are updated by the transactions, and migrates the integrated data to the migration destination blockchain 3 and the migration destination DB 4.

As illustrated in FIG. 5, the data migration unit 5 may include a blockchain communication unit 51, a block data process unit 52, and a DB communication unit 53.

The blockchain communication unit 51 performs communication of data between the migration source blockchain 2 and the migration source blockchain 3, and includes a block acquisition unit 51a and a transaction transceiving unit 51b.

The block data process unit 52 generates the transaction data and the hash values of data migration based on the data received from the blockchain communication unit 51, and includes a data integration unit 52a and a data compression unit 52b.

The DB communication unit 53 performs communication of data with the migration destination DB 4, and includes a data transceiving unit 53a.

Hereinafter, the above-described functional blocks included in the data migration unit 5 will be explained in the description of the process by the data migration unit 5. The data migration unit 5 may illustratively execute processes of following (i) to (iv) (corresponding to symbols (i) to (iv) in FIG. 5).

(i) The block acquisition unit 51a collectively obtains block information of the migration source blockchain 2, in other words, the transaction data, from the transceiving unit 21a of the migration source blockchain 2.

The block acquisition unit 51a transmits (outputs) the obtained block information to the data integration unit 52a.

The block acquisition unit 51a may, for example, obtain transaction data in the migration source blockchain 2 from the first (oldest) block to the last (latest) block in ascending chronological order, in other words, in registration order of each of the multiple transactions.

(ii) The data integration unit 52a divides all transaction data obtained in the above (i) into units of groups based on the keys, and integrates them as update history groups. Each of the groups may be, for example, formed by integrating multiple data (values) associated with the same key in accordance with a predetermined condition.

The predetermined condition may include the number of cases of values to be included in each of the groups being set as at least one of: a predetermined number of cases; a number in which the total data size of values to be included in each of the groups becomes a predetermined data size or less; and the number of cases to be included in a predetermined number of blocks. The predetermined number of cases, the predetermined data size, and the predetermined number (of blocks) can be set in advance.

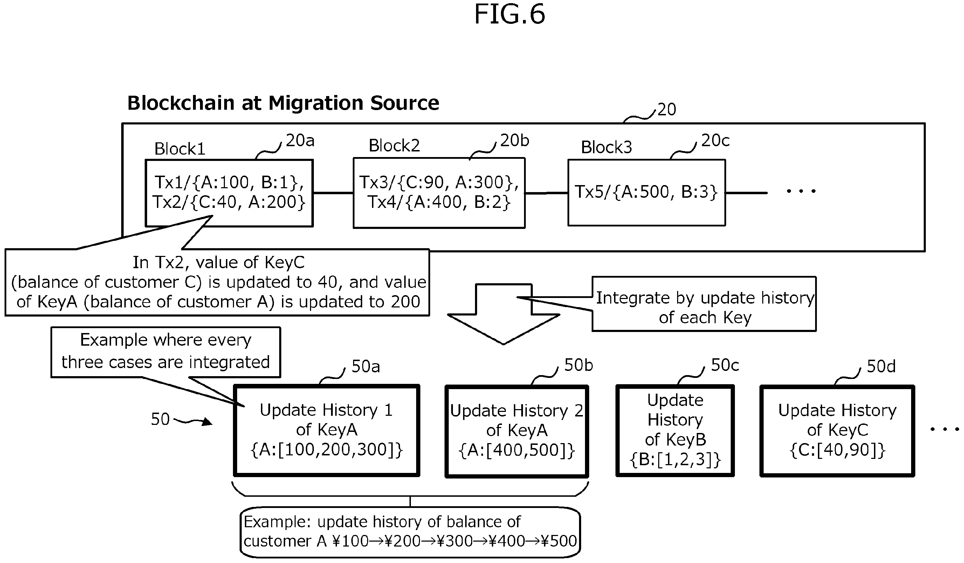

FIG. 6 is a diagram illustrating an example in which, regarding keys A, B, and C in the migration source blockchain 2, data having the same keys are integrated into units of three update histories as update history groups. FIG. 6 depicts a case where the predetermined condition sets the number of cases of values to be included in each of the groups as "the predetermined number of cases" and the predetermined number of cases is set as "3". In FIG. 6, a blockchain 20 is a blockchain within the ledger 22 and illustrates that at least blocks 20a to 20c (blocks 1 to 3) are registered thereinto.

As illustrated in FIG. 6, the block 20a includes Tx2 in which the value of key C (the balance of customer C) is updated to "40" and the value of key A (the balance of customer A) is updated to "200". The data integration unit 52a integrates each value (balance) in the transactions Tx1 to Tx5 into units of three cases in accordance with the update history of each key (customer) as update history groups 50a to 50d.

As an example, the update history groups 50a and 50b indicate that the update history of balance of customer A is in the order of 100 yen, 200 yen, 300 yen, 400 yen, and 500 yen (the last is the latest value). In the example of FIG. 6, since the transaction data is obtained in the registration order of the transactions by the above (i), the update order of the balance is appropriately reflected in the update history groups 50a and 50b.

In FIG. 6, the update history groups 50a to 50d may be managed, for example, in a storing region 50 such as a memory of the computer that executes the data migration process.

(iii) The data migration unit 5 adds, to the hash values of the update history groups 50a to 50d, access information for accessing the DB 42 (or the migration destination DB 4) at the respective migration destinations, and registers the hash values into the migration destination blockchain 3. The access information may be, for example, a URI (Uniform Resource Identifier) such as a URL (Uniform Resource Locator) and an IP (Internet Protocol) address of the DB 42 at the migration destination or the migration destination DB 4.

For example, the data compression unit 52b calculates the hash values by performing hash operation on each of the update history groups 50a to 50d integrated by the data integration unit 52a. The calculation of the hash values may be achieved by known methods.

In the migration destination blockchain 3, one block may be allocated to each hash value, and each block may be connected in the order of the update history groups 50a to 50d.

The block data process unit 52 transmits (outputs), to the transaction transceiving unit 51b, migration transactions obtained by the addition of the access information to the hash values calculated by the data compression unit 52b.

Upon receiving (getting) the migration transactions from the block data process unit 52, the transaction transceiving unit 51b transmits the migration transactions to the transceiving unit 31a of the migration destination blockchain 3 together with registration instruction for the ledger 32. Further, the transaction transceiving unit 51b receives, from the transceiving unit 31a, the TxIDs (migration TxIDs) at the time when the migration transactions were registered into the ledger 32, and transmits the TxIDs to the DB communication unit 53.

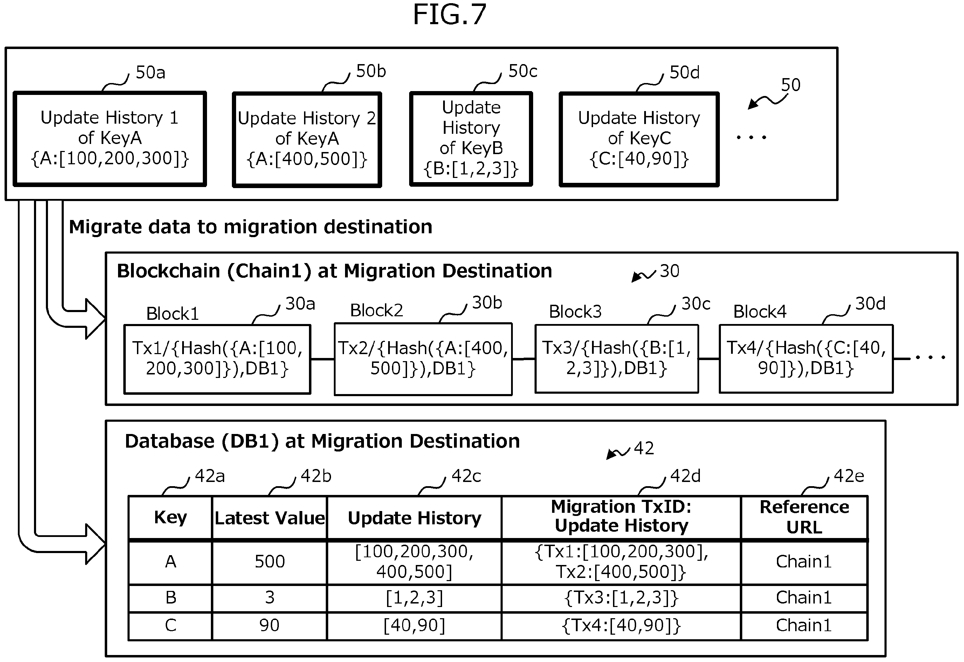

FIG. 7 is a diagram illustrating an example of data registered into a blockchain 30 and the DB 42 at the migration destinations. In FIG. 7, the blockchain 30 at the migration destination is within the ledger 32 of the migration destination blockchain 3.

For example, as illustrated in FIG. 7, the block data process unit 52 adds the access information (DB1) to the hash value (Hash({A:[100,200,300]})) obtained through hashing of the update history group 50a. The transaction transceiving unit 51b registers the migration transaction into a block 30a of the blockchain 30 through the transceiving unit 31a. Since this migration transaction is a transaction of migration TxID:Tx1 in the blockchain 30, the transaction transceiving unit 51b notifies the data transceiving unit 53a of migration TxID:Tx1.

Further, for example, the block data process unit 52 adds the access information (DB1) to the hash value (Hash({A: [400,500]})) obtained through hashing of the update history group 50b. The transaction transceiving unit 51b registers, through the transceiving unit 31a, the migration transaction into a block 30b connected to the block 30a. Since this migration transaction is a transaction of migration TxID:Tx2 in the blockchain 30, the transaction transceiving unit 51b notifies the data transceiving unit 53a of migration TxID:Tx2 .

As such, in the blockchain 30, the hash values integrated in the units of groups are registered into blocks (the blocks 30a to 30d in the example of FIG. 7). Therefore, for example, when the value of key B is referred to, by the obtainment of the transaction data of the block 30c, the update histories of the same key B can be collectively verified, which can enhance the processing efficiency as compared with the example of FIG. 3.

According to the above description, the blockchain communication unit 51 and the block data process unit 52 are an example of a second registration unit that registers, into the migration destination blockchain 3, the hash values obtained by hashing multiple values in the units of groups based on the keys.

(iv) The data migration unit 5 adds, to each of the update history groups 50a to 50d, a TxID at the time of registration of each hash value into the blockchain 30 and the access information for accessing the migration destination blockchain 3 or the blockchain 30, and registers the update history groups 50a to 50d into the migration destination DB 4. The access information may be, for example, a URI such as a URL and an IP address of the migration destination blockchain 3 or the blockchain 30.

As an example, the block data process unit 52 transmits key A of the update history group 50a and the values [100,200,300] of the update history group 50a, in other words, the transaction data, to the data transceiving unit 53a.

The data transceiving unit 53a transmits the transaction data received from the block data process unit 52 and the migration TxIDs received from the transaction transceiving unit 51b to the data transceiving unit 41a of the migration destination DB 4 together with registration instruction for the DB 42.

For example, as illustrated in FIG. 7, the data transceiving unit 53a registers, through the data transceiving unit 41a, key A of the update history group 50a into the key 42a of the DB 42 and the values [100,200,300] of the update history group 50a into the update history 42c of the DB 42. Further, through the data transceiving unit 41a, the data transceiving unit 53a registers, into the migration TxID 42d of the DB 42, the TxID (Tx1) at the time when the hash value of the update history group 50a was registered into the block 30a. Furthermore, the data transceiving unit 53a registers, through the data transceiving unit 41a, the access information (Chain1) of the blockchain 30 into a reference URL 42e of the DB 42.

The migration TxIDs 42d is information that can identify registration position of the hash value in the blockchain 30, and is an example of registration position information on the hash value. In addition to the TxIDs, the update histories corresponding to the TxIDs may be registered into the migration TxID 42d.

As illustrated in FIG. 7, when an entry matching key A of the update history group 50b exists in the DB 42, the data transceiving unit 53a registers (adds) the values [400,500] of the update history group 50b to the update history 42c of the entry through the data transceiving unit 41a. Further, as illustrated in FIG. 7, through the data transceiving unit 41a, the data transceiving unit 53a registers, into the migration TxID 42d of the entry matching key A of the update history group 50b, the TxID (Tx2) at the time when the hash value of the update history group 50b was registered into the block 30b.

As illustrated in FIG. 7, through the transceiving unit 31a, the data transceiving unit 53a may register, into a latest value 42b of the entry of the target key, the latest value ("500" in the case of key A, for example) of the update history 42c for each key 42a.

According to the above description, the block data process unit 52 and the DB communication unit 53 are an example of a first registration unit that registers, into the migration destination DB 4, with respect to the migration source blockchain 2, multiple values in multiple transactions in the units of groups based on the keys.

As described above, the data migration unit 5 executes the migration process of the transaction data from the migration source blockchain 2 to the migration destination blockchain 3 and the migration destination DB 4.

The migration process described above may be executed by, for example, a data migration process (the data migration unit 5) which is started by the processor upon receiving an execution request for the migration process from the user.

### (Description of Data Registration Unit 6)

After the end of the migration process, the processor may start the data registration process. The started data registration process (the data registration unit 6) may initialize the migration source blockchain 2 and may inherit the information on the update history groups 50a to 50d held in the storing region 50 through the data migration process.

As illustrated in FIG. 5, the data registration unit 6 may include a request transmission unit 61.

The request transmission unit 61 transmits requests such as registration requests for the updated value of each key to the migration source blockchain 2. As an example, the request transmission unit 61 may generate and transmit a registration request when receiving an updated value of a key from the user (client).

The data registration unit 6 may illustratively execute a process of following (v) (corresponding to symbol (v) in FIG. 5).

(v) The request transmission unit 61 registers the latest values of the update history groups 50a to 50d into the migration source blockchain 2.

For example, the request transmission unit 61 waits until both the registration) of data into the blockchain 30 and the DB 42 by the migration process of the data migration unit 5, and the initialization of the migration source blockchain 2 end.

After the end of the migration process and the initialization, the request transmission unit 61 obtains, from the data integration unit 52a, the latest values of the update history groups 50a to 50d each registered into the DB 42. The data integration unit 52a may obtain the respective latest values from the update history groups 50a to 50d stored in the storing region 50, or may obtain the latest value 42b of each key 42a in the DB 42 at the migration destination (see FIG. 7) via the DB communication unit 53.

Further, the request transmission unit 61 registers, into the migration source blockchain, a transaction with which the latest value of each of the update history groups 50a to 50d and a flag indicating existence of an update history of keys in each of the update history groups 50a to 50d in the migration destination DB 4 are associated. The flag (archive flag) is an example of third information indicating that a value older than the latest value among one or more values (update histories) exists in the migration destination DB 4.

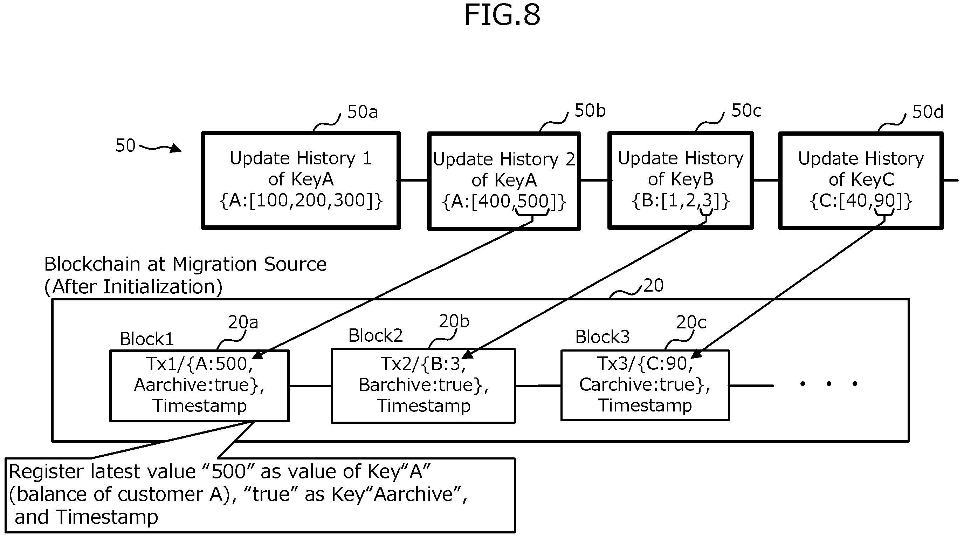

FIG. 8 is a diagram illustrating an example of data registered into the migration source blockchain 2 after the initialization. In the migration source blockchain 2, the blocks 20a to 20c (see FIG. 6) before the initialization are deleted by the initialization.

In the migration source blockchain 2 after the initialization, the latest values (500, 3, 90) of the keys (keys A, B, and C) in the update history groups 50b to 50d are registered into the blocks 20a to 20c, respectively. In the blocks 20a to 20c, true indicating that the archive flag is ON is registered into the key Archive. As illustrated in FIG. 8, a timestamp may be registered into each of the blocks 20a to 20c (each of transactions Tx1 to Tx3).

As described above, the request transmission unit 61 is an example of a third registration unit that registers, into the third blockchain, a transaction with which the first information, the second information, and the third information are associated. By using the flag, referring to the migration source blockchain 2 enables easy detection (determination) of the existence of an updated value older than the latest updated value in the migration destination DB 4.

In addition, the request transmission unit 61 is an example of a fourth registration unit that registers, after the registration of the transaction including the flag and in response to a registration request for a new transaction, a transaction related to the registration request subsequent to the transaction including the flag. This ensures consistency of the transactions before and after the migration in the migration source blockchain 2.

Although the above description relates to an example of using (reusing) the database resulted from the initialization of the migration source blockchain 2 as a new migration source blockchain 2 after the data migration from the migration source blockchain 2, the present disclosure is not limited to this example. As the "new migration source blockchain", another blockchain different from the migration source blockchain 2 may be used. The migration source blockchain 2 or another blockchain different from the migration source blockchain 2 used as the new migration source blockchain is an example of the third blockchain.

### (Description of Data Reference Unit 7)

The data reference process is operable if neither the data migration process nor the data registration process is operating and the migration source blockchain 2, the migration destination blockchain 3, and the migration destination DB 4 are activated. For example, in response to a request for data reference from the user (client), the data reference process (data reference unit 7) obtains the update history group corresponding to the key by specifying a time range. The user can refer to the update history group in one of or both the migration source blockchain 2 and the combination of the migration destination blockchain 3 and the migration destination DB 4, without being aware of the destination into which the data is stored.

The data reference unit 7 performs a tampering verification process for the data received from a reference in response to a data reference request.

As illustrated in FIG. 5, the data reference unit 7 may include a request destination control unit 71, a request transmission unit 72, and a tampering verification unit 73.

The request destination control unit 71 controls request destinations at the time of data reference.

The request transmission unit 72 transmits a reference request for data to one of or both the migration source blockchain 2 and the combination of the migration destination blockchain 3 and the migration destination DB 4 in response to the control by the request destination control unit 71.

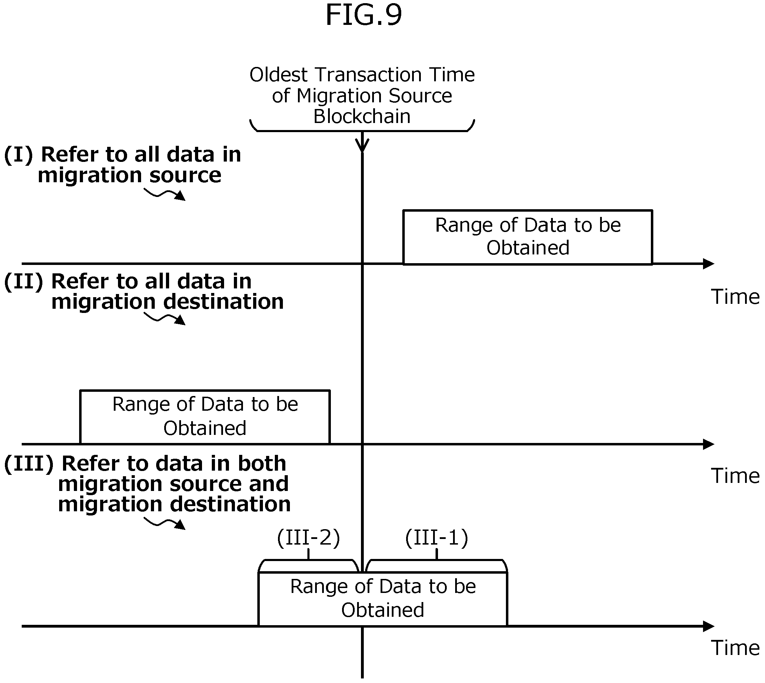

FIG. 9 is a diagram illustrating an example of relationships between time ranges and obtainment sources of data to be obtained. The data to be obtained is, for example, data that matches conditions (e.g. , the key and the time range of an obtainment target (a target to be obtained)) of the data reference requested by the user.

For example, the request destination control unit 71 specifies the update history group for the key of the obtainment target by a time range, and through the request transmission unit 72, refers to the oldest update history data of the key of the obtainment target in the migration source blockchain 2. In the example of FIG. 8, when the target key is key A, the request destination control unit 71 refers to the data in the block 20a. The following description assumes that the time of the obtained (referred) data (the time of the oldest transaction) is derived from the timestamp registered into the block 20a.

As illustrated in FIG. 9, when the latest time in the time range of the obtainment target is newer than the time of the obtained data, the request destination control unit 71 determines to set the migration source blockchain 2 as the reference to the update history data.

When the oldest time in the time range of the obtainment target is newer than the oldest time of the migration source blockchain 2, the request destination control unit 71 determines to refer to the data in the range of "the oldest time of the obtainment target to the latest time of the obtainment target" in the reference (corresponding to the example of (I) in FIG. 9).

On the other hand, when the oldest time in the time range of the obtainment target is older than the oldest time of the migration source blockchain 2, the request destination control unit 71 determines to refer to the data in a first range of "the oldest time of the migration source blockchain 2 to the latest time of the obtainment target" in the reference. The data in the first range corresponds to the data in the range of (III-1) in the example of (III) in FIG. 9.

Further, when the oldest time of the obtainment target is older than the oldest time of the migration source blockchain 2 and the archive flag is added to the obtained data, the request destination control unit 71 determines to set the migration destination blockchain 3 and the migration destination DB 4 as the reference of the update history data.

When the latest time of the obtainment target is older than the time of the obtained data, the request destination control unit 71 determines to refer to the data in the range of "the oldest time of the obtainment target to the latest time of the obtainment target" in the reference (migration destination) (corresponding to the example of (II) in FIG. 9).

On the other hand, when the latest time of the obtainment target is newer than the oldest time of the migration source blockchain 2, the request destination control unit 71 determines to refer to the data in a second range of "the oldest time of the obtainment target to the oldest time of the migration source blockchain 2" in the reference (migration destination). The data in the second range corresponds to the data in the range of (III-2) in the example of (III) in FIG. 9.

As described above, the request destination control unit 71 and the request transmission unit 72 are an example of a reference unit. The reference unit refers to the transaction data in the migration source blockchain 2 based on the keys included in the multiple transactions registered by the request transmission unit 61. Further, when the data older than the referred data is requested by the data reference, the reference unit refers to the older data in the migration destination DB 4 based on the flag associated with the transaction of the referred data. This enables reference to older transaction data in the migration destination blockchain 3 and the migration destination DB 4.

The tampering verification unit 73 performs tampering verification for the data obtained (referred) in response to the reference request transmitted by the request transmission unit 72.

For example, the tampering verification unit 73 obtains the hash value by referring to the update history data of the migration destination blockchain 3 through the request transmission unit 72 while using one or more TxIDs associated with the update history data obtained in the example of (II) or (III-2) in FIG. 9.

Then, the tampering verification unit 73 calculates the hash value of the above update history data, compares the calculated hash value and the hash value obtained from the migration destination blockchain 3, and verifies the tampering of the data obtained from the migration destination DB 4 based on the comparison result. For example, the tampering verification unit 73 may determine that the data obtained from the migration destination DB 4 has not been tampered with when the comparison result matches, and may determine that the data obtained from the migration destination DB 4 has been tampered with when the comparison result does not match.

As described above, the tampering verification unit 73 is an example of a first acquisition unit that obtains, from the migration destination DB 4, one or more data to which a predetermined TxID is added. Further, the tampering verification unit 73 is an example of a second acquisition unit that obtains, from the migration destination blockchain 3, a hash value corresponding to the predetermined TxID. Furthermore, the tampering verification unit 73 is an example of a verification unit that performs tampering verification for one or more data obtained from the migration destination DB 4 based on a hash value obtained by hashing one or more data obtained as the first acquisition unit and a hash value obtained as the second acquisition unit. As such, according to the tampering verification unit 73, the tampering verification of the migrated transactions can be streamlined.

### <1-2> Operation Example of One Embodiment

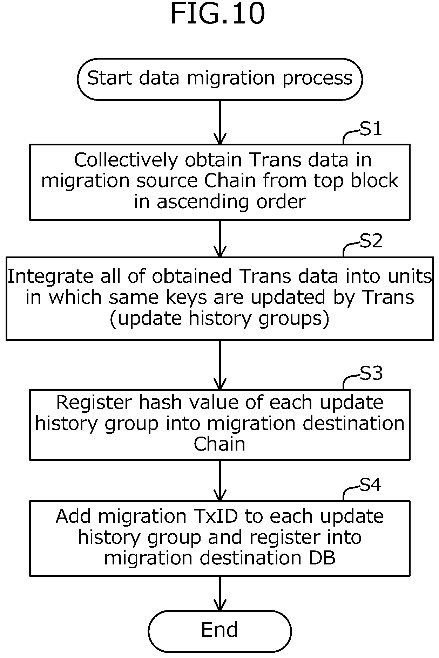

Next, an operation example of the blockchain system 1 according to the one embodiment will be described with reference to FIGs. 10 to 13.

### <1-2-1> Operation Example of Data Migration Process

As illustrated in FIG. 10, the block acquisition unit 51a collectively obtains the transaction data in the migration source blockchain 2 from the top block in the ascending order (Step S1).

The data integration unit 52a integrates all of the transaction data obtained by the block acquisition unit 51a into the units in which the same keys are updated by the transactions, and thereby, forms the update history groups (Step S2).

The data compression unit 52b calculates the hash value of each update history group, and the transaction transceiving unit 51b registers the calculated hash values into the migration destination blockchain 3 (Step S3).

The transaction transceiving unit 51b obtains the migration TxID from the migration destination blockchain 3, and the block data process unit 52 adds the migration TxID to each update history group. The data transceiving unit 53a registers, into the migration destination database 4, each update history group to which the migration TxID is added (Step S4), and the process ends.

The data migration unit 5 or the data registration unit 6 may initialize the migration source blockchain 2 after the process of Step S4 is completed.

### <1-2-2> Operation Example of Data Registration Process

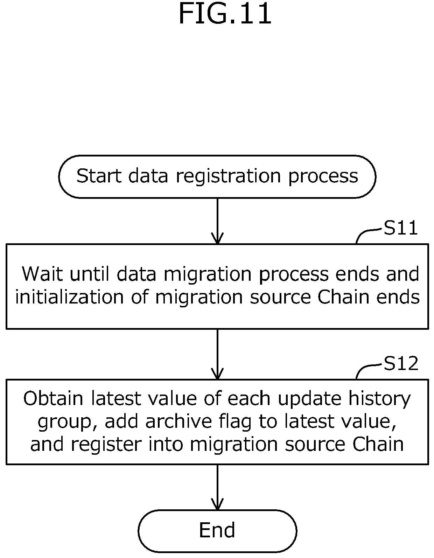

As illustrated in FIG. 11, the data registration unit 6 waits until the data migration process ends and the initialization of the migration source blockchain 2 ends (Step S11).

The request transmission unit 61 obtains the latest value of each update history group, adds the archive flag to the latest value, and registers the latest value into the migration source blockchain 2 (Step S12), and the process ends.

### <1-2-3> Operation Example of Data Reference Process

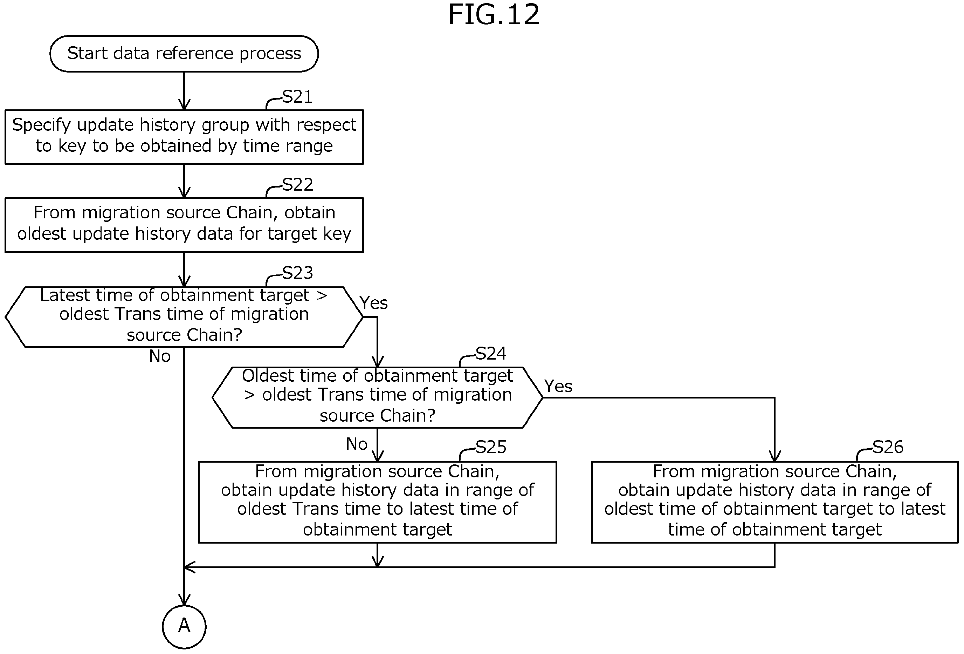

As illustrated in FIG. 12, the request destination control unit 71 specifies the update history group with respect to the key of the obtainment target by a time range (Step S21).

In addition, the request destination control unit 71 obtains the oldest update history data of the target key from the migration source blockchain 2 (Step S22). Then, the request destination control unit 71 determines whether or not the latest time of the obtainment target is larger (newer) than the oldest transaction time of the migration source blockchain 2 (Step S23).

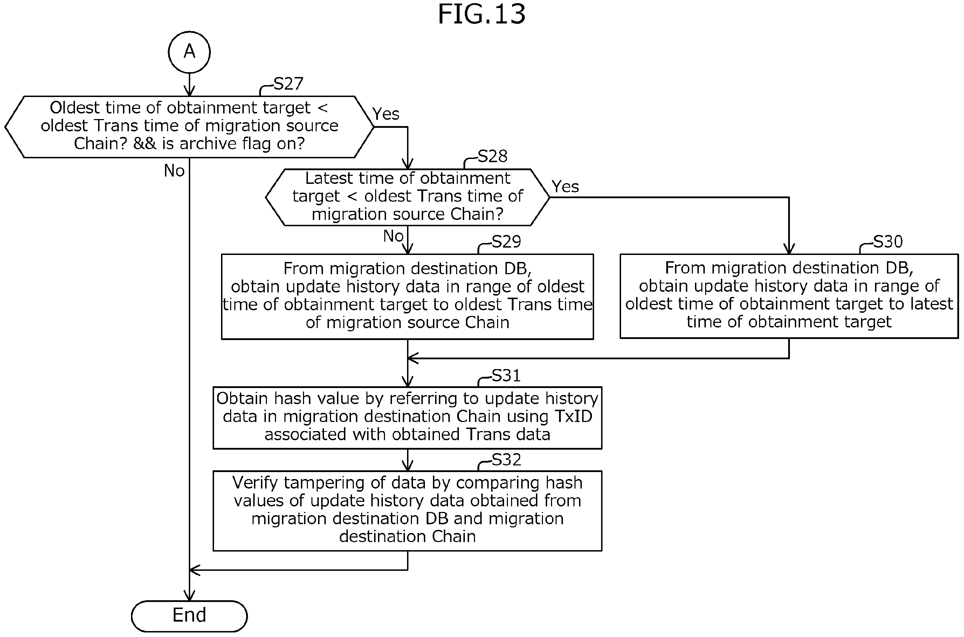

In the case of No in Step S23, the process proceeds to Step S27 in FIG. 13. On the other hand, in the case of Yes in Step S23, the request destination control unit 71 determines whether or not the oldest time of the obtainment target is larger than the oldest transaction time of the migration source blockchain 2 (Step S24).

In the case of No in Step S24, the request destination control unit 71 obtains, through the request transmission unit 72 and from the migration source blockchain 2, the update history data in the range of the oldest transaction time to the latest time of the obtainment target (Step S25). Then, the process proceeds to Step S27.

In the case of Yes in Step S24, the request destination control unit 71 obtains, through the request transmission unit 72 and from the migration source blockchain 2, the update history data in the range of the oldest time of the obtainment target to the latest time of the obtainment target (Step S26), and the process proceeds to Step S27.

As illustrated in FIG. 13, in Step S27, the request destination control unit 71 determines whether or not the oldest time of the obtainment target is smaller (older) than the oldest transaction time of the migration source blockchain 2.

In the case of No in Step S27, the process ends. On the other hand, in the case of Yes in Step S27, the request destination control unit 71 determines whether or not the latest time of the obtainment target is smaller than the oldest transaction time of the migration source blockchain 2 (Step S28).

In the case of No in Step S28, the request destination control unit 71 obtains, through the request transmission unit 72 and from the migration destination DB 4, the update history data in the range of the oldest time of the obtainment target to the oldest transaction time of the migration source blockchain 2 (Step S29). Then, the process proceeds to Step S31.

In the case of Yes in Step S28, the request destination control unit 71 obtains, through the request transmission unit 72 and from the migration destination DB 4, the update history data in the range of the oldest time of the obtainment target to the latest time of the obtainment target (Step S30), and the process proceeds to Step S31.

In Step S31, the tampering verification unit 73 obtains the hash value from the update history data by referring to the update history data in the migration destination blockchain 3 by using the TxID associated with the obtained transaction data.

The tampering verification unit 73 verifies the tampering of the data by comparing the hash values of the update history data obtained from the migration destination DB 4 and the migration destination blockchain 3 (Step S32), and the process ends.

As described above, in the blockchain system 1 according to the one embodiment, the first registration unit registers, into the migration destination DB 4, with respect to the migration source blockchain 2 that stores multiple transactions with which the first information and the second information are associated, multiple pieces of the second information in the multiple transactions in units of groups based on the first information. In addition, the second registration unit registers, into the migration destination blockchain 3, hash values obtained by hashing the multiple pieces of second information in the units of groups.

As a result, the amount of data managed on the migration destination blockchain 3 can be reduced. For example, when 100 transaction data are collectively hashed together, as compared with the case where the transaction data is hashed one by one, the amount of data in the blockchain can be 1/100 or less (compression ratio can be 100 times or more) and the number of hash verifications at the time of data reference can be 1/100 or less. Therefore, the tampering verification of the data at the migration destinations can be easily performed, and the tampering verification can be streamlined.

Each of the groups may be formed by integrating multiple pieces of second information associated with the same first information in accordance with a predetermined condition. Consequently, the number of hash values managed by the migration destination blockchain 3 can be reduced, and the reference to the migration destination blockchain 3 can be facilitated.

Further, the predetermined condition may include the number of pieces of second information to be included in each of the groups being set as at least one of a predetermined number, a number in which the total data size of second information to be included in each of the groups becomes a predetermined data size or less, and a number of pieces of second information to be included in a predetermined number of blocks.

Consequently, the number of cases of data to be hashed together is limited, which can suppress an increase in the processing load (for example, the hash operation load of the reference data) at the time of the tampering verification.

When registering the multiple pieces of second information into the migration destination DB 4, the first registration unit may add migration TxIDs of the hash values in the units of groups registered into the migration destination blockchain 3 to second information included in groups corresponding to the hash values. Consequently, the hash values corresponding to the reference data can be efficiently obtained.

The first acquisition unit obtains, from the migration destination DB 4, one or more pieces of second information to which a predetermined migration TxID is added, and the second acquisition unit obtains, from the migration destination blockchain 3, a hash value corresponding to the predetermined migration TxID. Further, the verification unit may perform tampering verification for the one or more pieces of second information obtained from the migration destination DB 4 based on a hash value obtained by hashing the one or more pieces of second information obtained by the first acquisition unit and the hash value obtained by the second acquisition unit. Accordingly, the tampering verification of data in the migration destination blockchain 3 and the migration destination block DB 4 can be efficiently performed.

The reference unit may refer to the second information in the migration source blockchain 2 after the restart based on the first information included in the multiple transactions registered by the third registration unit, and when second information older than the referred second information is requested, the reference unit may refer to the older second information in the migration destination DB 4 based on the third information associated with a transaction of the referred second information.

As such, by initializing the migration source blockchain 2 and registering the latest values of the update history groups, and at the time of data reference, by allocating the reference to the migration source blockchain 2 and the combination of the migration destination blockchain 3 and the migration destination DB 4 based on the blockchain, it becomes possible for the clients to refer to the data without being aware of the reference of the data.

### <1-3> Hardware Configuration Example of One Embodiment

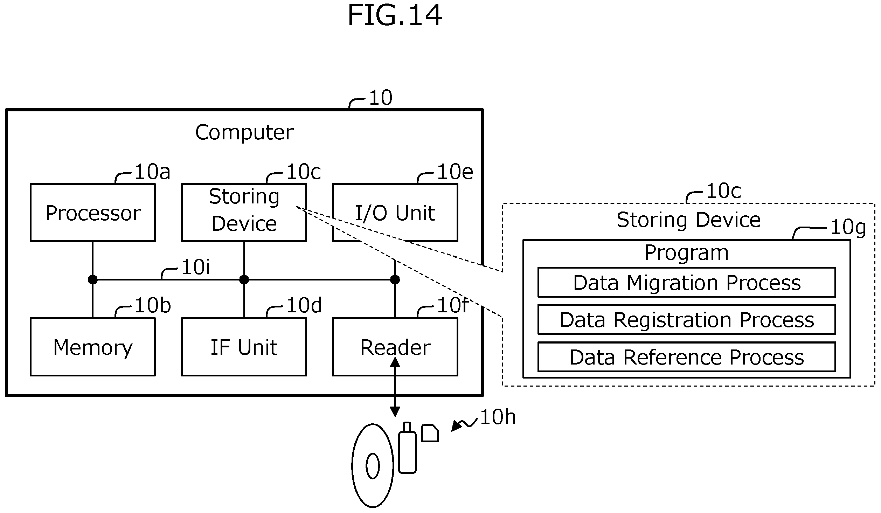

FIG. 14 is a block diagram illustrating a HW (Hardware) configuration example of a computer 10 that achieves the functions of the blockchain system 1. If multiple computers are used as the HW resources for achieving the functions of the blockchain system 1, each of the computers may include the HW configuration illustrated in FIG. 14.

As illustrated in FIG. 14, the computer 10 may illustratively include, as the HW configuration, a processor 10a, a memory 10b, a storing device 10c, an IF (Interface) unit 10d, an I/O (Input/Output) unit 10e, and a reader 10f.

The processor 10a is an example of an arithmetic processing device that performs various controls and arithmetic operations. The processor 10a may be connected to each block in the computer 10 so as to be mutually communicable via a bus 10i. The processor 10a may be a multiprocessor including multiple processors or a multi-core processor including multiple processor cores, or may have a configuration having multiple multi-core processors.

An example of the processor 10a is an integrated circuit (IC; Integrated Circuit) such as a CPU, an MPU, a GPU, an APU, a DSP, an ASIC, and an FPGA. Alternatively, the processor 10a may be a combination of two or more integrated circuits exemplified as the above. The CPU is an abbreviation of Central Processing Unit, the MPU is an abbreviation of Micro Processing Unit, the GPU is an abbreviation of Graphics Processing Unit, the APU is an abbreviation of Accelerated Processing Unit, the DSP is an abbreviation of Digital Signal Processor, the ASIC is an abbreviation of Application Specific IC, and the FPGA is an abbreviation of Field-Programmable Gate Array.

The memory 10b is an example of a HW that stores information such as various data and programs. An example of the memory 10b may be a volatile memory such as a DRAM (Dynamic RAM).

The storing device 10c is an example of a HW that stores information such as various data and programs. Examples of the storing device 10c include various storing devices exemplified by a magnetic disk device such as an HDD (Hard Disk Drive), a semiconductor drive device such as an SSD (Solid State Drive), and a non-volatile memory. The non-volatile memory may be, for example, a flash memory, an SCM (Storage Class Memory), a ROM (Read Only Memory), or the like.

For the storing regions 50 (see FIG. 6) included in the ledgers 22 and 32, the DB 42, and the data migration unit 5 each illustrated in FIG. 5, at least part of storing regions included in the memory 10b or the storing device 10c may be used.

The storing device 10c may store a program 10g (transaction management program) that achieves all or part of the functions of the computer 10.

For example, by expanding the program 10g stored in the storing device 10c onto the memory 10b and executing the expanded program 10g, the processor 10a can execute at least one of the data migration process, the data registration process, and the data reference process, which are provided by the program 10g. In addition, the functions of at least one of the blockchain control unit 21, the blockchain control unit 31, and the DB control unit 41 may also be provided by the program 10g.

In other words, the computer 10 can operate as the transaction management device configured by at least one or various combinations of the migration source blockchain 2, the migration destination blockchain 3, the migration destination DB 4, the data migration unit 5, data registration unit 6, and the data reference unit 7. As a non-limiting example, the migration source blockchain 2 and the data migration unit 5 may be achieved by a single computer 10, or alternatively, the migration source blockchain 2, the data migration unit 5, data registration unit 6, and the data reference unit 7 may be achieved by a single computer 10. Further, the migration destination blockchain 3 and the migration destination DB 4 may each be achieved by a single computer 10.

The IF unit 10d is an example of a communication IF that controls connection to and communication with a network, and the like. For example, the IF unit 10d may include an adaptor compatible with a LAN (Local Area Network) or an optical communication (e.g., FC (Fibre Channel)), or the like. The adaptor may be compatible with one or both of wired and wireless communication schemes . For example, the program 10g may be downloaded from a network to the computer 10 through the communication IF and then stored into the storing device 10c.

In cases where the blockchain system 1 is achieved by multiple computers 10, the above network may connect the computers to one another.

The I/O unit 10e may include an input device, an output device, or both. Examples of the input device may be a keyboard, a mouse, and a touch screen. Examples of the output device may be a monitor, a projector, and a printer.

The reader 10f is an example of a reader that reads information on data and programs recorded on a recording medium 10h. The reader 10f may include a connecting terminal or a device to which the recording medium 10h can be connected or inserted. Examples of the reader 10f include an adapter conforming to, for example, USB (Universal Serial Bus), a drive device that accesses a recording disk, and a card reader that accesses a flash memory such as an SD card. The program 10g may be stored in the recording medium 10h, and the reader 10f may read the program 10g from the recording medium 10h and then store the read program 10g into the storing device 10c.

The recording medium 10h may illustratively be a non-transitory computer-readable recording medium such as a magnetic/optical disk and a flash memory. The magnetic/optical disk may illustratively be a flexible disk, a CD (Compact Disc), a DVD (Digital Versatile Disc), a Blu-ray disk, an HVD (Holographic Versatile Disc), or the like. The flash memory may illustratively be a semiconductor memory such as a USB memory and an SD card.

The HW configuration of the computer 10 described above is merely illustrative. Accordingly, the computer 10 may appropriately undergo increase or decrease of HW (e.g., addition or deletion of arbitrary blocks), division, integration in an arbitrary combination, and addition or deletion of the bus. For example, at least one of the I/O unit 10e and the reader 10f may be omitted in the computer 10.

The blockchain system 1, for example, as a cloud system may be configured by a HW resource and a NW (Network) resource that are configured by multiple computers 10 mutually connected so as to be communicable with each other via a non-illustrated network.

In this case, each of nodes such as the migration source blockchain 2, the migration destination blockchain 3, the migration destination DB 4, the data migration unit 5, the data registration unit 6, and the data reference unit 7 included in the blockchain system 1 may be realized by logically (virtually) or physically dividing the HW resource and the NW resource configured by the multiple computers 10 and allocating them to the nodes.

In other words, the blockchain system 1 may be regarded as a single transaction management device including a processor resource (processor), a memory resource (memory), a storage resource (storing device), and an IF resource (IF unit), which serve as the HW resource and the NW resource provided by the multiple computers 10. The blockchain system 1 as the transaction management device (computer) can allocate the processor resource, the memory resource, the storage resource, and the IF resource to the nodes for implementing particular functional blocks, or can release the allocations to the nodes, by a scale out process.

In the blockchain system 1 as a cloud system, the program 10g for realizing the function as the blockchain system 1 may be divided into units of execution in each of multiple nodes and the divided program may be distributed to the multiple nodes. The multiple nodes (the functional blocks 2 to 7 in FIG. 5) may be any of multiple physical machines, multiple virtual machines (VMs; Virtual Machines), and a combination of one or more physical machines and one or more virtual machines.

That is, even if the program 10g is distributed to the multiple nodes, the program 10g can be regarded as a single program that causes the transaction management device (computer) or the transaction management system to execute the function of the blockchain system 1.

### <2> Miscellaneous

The technique according to the one embodiment described above can be changed or modified as follows.

For example, each functional block included in the blockchain system 1 depicted in FIG. 5 may be merged in any combination, or may each be divided.

### REFERENCE SIGNS LIST

1 blockchain system
2 migration source blockchain
20, 30 blockchain
20a-20c, 30a-30d block
21, 31 blockchain control unit
21a, 31a transceiving unit
22, 32 ledger
4 migration destination database
41 database control unit
41a, 53a data transceiving unit
42 database
5 data migration unit
51 blockchain communication unit
51a block acquisition unit
51b transaction transceiving unit
52 block data process unit
52a data integration unit
52b data compression unit
53 database communication unit
50 storing region
50a-50e update history group
6 data registration unit
61, 72 request transmission unit
7 data reference unit
71 request destination control unit
73 tampering verification unit

## Claims

1. A transaction management device comprising:
a first registration unit (52, 53) that registers, into a database (4), with respect to a first blockchain (2) that stores a plurality of transactions with which first information and second information are associated, a plurality of pieces of the second information in the plurality of transactions in units of groups based on the first information; and
a second registration unit (51, 52) that registers, into a second blockchain (3), hash values obtained by hashing the plurality of pieces of second information in the units of groups.

2. The transaction management device according to claim 1, wherein
each of the groups is formed by integrating a plurality of multiple pieces of second information associated with same first information in accordance with a predetermined condition.

3. The transaction management device according to claim 2, wherein
the predetermined condition includes a number of pieces of second information to be included in each of the groups being set as at least one of a predetermined number, a number in which a total data size of second information to be included in each of the groups becomes a predetermined data size or less, and a number of pieces of second information to be included in a predetermined number of blocks.

4. The transaction management device according to any one of claims 1 to 3, wherein
when registering the plurality of pieces of second information into the database (4), the first registration unit (52, 53) adds registration position information on hash values in the units of groups registered into the second blockchain (3) to second information included in groups corresponding to the hash values.

5. The transaction management device according to claim 4, further comprising:
a first acquisition unit (73) that obtains, from the database (4), one or more pieces of second information to which predetermined registration position information is added;
a second acquisition unit (73) that obtains, from the second blockchain (3), a hash value corresponding to the predetermined registration position information; and
a verification unit (73) that performs tampering verification for the one or more pieces of second information obtained from the database (4) based on a hash value obtained by hashing the one or more pieces of second information obtained by the first acquisition unit (73) and the hash value obtained by the second acquisition unit (73) .

6. The transaction management device according to any one of claims 1 to 5, further comprising
a third registration unit (61) that registers, into a third blockchain (2), after the registration by the first registration unit (52, 53) and the registration by the second registration unit (51, 52), a transaction with which the first information included in the plurality of transactions, latest second information among one or more pieces of second information associated with the first information, and third information indicating that second information older than the latest second information among the one or more pieces of second information exists in the database (4), are associated.

7. The transaction management device according to claim 6, further comprising
a fourth registration unit (61) that registers, into the third blockchain (2), after the registration by the third registration unit (61) and in response to a registration request for a transaction with which a new combination of first information and second information is associated, a transaction related to the registration request subsequent to the transaction registered by the third registering unit (61) .

8. The transaction management device according to claim 6 or 7, further comprising
a reference unit (71, 72) that refers to the second information in the third blockchain (2) based on the first information included in the plurality of transactions registered by the third registration unit (61), and when second information older than the referred second information is requested, refers to the older second information in the database (4) based on the third information associated with a transaction of the referred second information.

9. The transaction management device according to any one of claims 6 to 8, wherein
the third blockchain (2) is a blockchain resulted from initialization of the first blockchain (2).

10. The transaction management device according to any one of claims 1 to 9, wherein:
the first information associated with the transaction is a key of a processing target of the transaction; and
the second information associated with the transaction is a value of the key, which is updated by a process of the transaction.

11. A transaction management program that instructs a computer to execute a process comprising:
registering, into a database (4), with respect to a first blockchain (2) that stores a plurality of transactions with which first information and second information are associated, a plurality of pieces of the second information in the plurality of transactions in units of groups based on the first information; and
registering, into a second blockchain (3), hash values obtained by hashing the plurality of pieces of second information in the units of groups.

12. The transaction management program according to claim 11, wherein
each of the groups is formed by integrating a plurality of pieces of second information associated with same first information in accordance with a predetermined condition.

13. The transaction management program according to claim 12, wherein
the predetermined condition includes a number of pieces of second information to be included in each of the groups being set as at least one of a predetermined number, a number in which a total data size of second information to be included in each of the groups becomes a predetermined data size or less, and a number of pieces of second information to be included in a predetermined number of blocks.

14. The transaction management program according to any one of claims 11 to 13, the process further comprising
when registering the plurality of pieces of second information into the database (4), adding registration position information on hash values in the units of groups registered in the second blockchain (3) to second information included in groups corresponding to the hash values.

15. The transaction management program according to claim 14, the process further comprising:
obtaining, from the database, one or more pieces of second information to which predetermined registration position information is added;
obtaining, from the second blockchain, a hash value corresponding to the predetermined registration position information; and
performing tampering verification for the one or more pieces of second information obtained from the database based on a hash value obtained by hashing the obtained one or more pieces of second information and the hash value obtained from the second blockchain.

16. The transaction management program according to any one of claims 11 to 15, the process further comprising
registering, into a third blockchain, after the registration to the database and the registration to the second blockchain, a transaction with which the first information included in the plurality of transactions, latest second information among one or more pieces of second information associated with the first information, and third information indicating that second information older than the latest second information among the one or more pieces of second information exists in the database, are associated.

17. The transaction management program according to claim 16, the process further comprising
registering, into the third blockchain, after the registration to the third blockchain and in response to a registration request for a transaction with which a new combination of first information and second information is associated, a transaction related to the registration request subsequent to the registered transaction.

18. The transaction management program according to claim 16 or 17, the process further comprising:
referring to the second information in the third blockchain based on the first information included in the plurality of registered transactions; and
when second information older than the referred second information is requested, referring to the older second information in the database based on the third information associated with a transaction of the referred second information.

19. A transaction management method performed by a computer, the method comprising:
registering, into a database (4), with respect to a first blockchain (2) that stores a plurality of transactions with which first information and second information are associated, a plurality of pieces of the second information in the plurality of transactions in units of groups based on the first information; and
registering, into a second blockchain (3), hash values obtained by hashing the plurality of pieces of second information in the units of groups.

20. The transaction management method according to claim 19, wherein
each of the groups is formed by integrating a plurality of pieces of second information associated with same first information in accordance with a predetermined condition.
